# EUROPEAN PATENT SPECIFICATION

(11) **EP 3 531 520 B1**
(45) Date of publication and mention of the grant of the patent: **24.03.2021**
(21) Application number: 18178999.1
(22) Date of filing: 21.06.2018
(51) Int. Cl.: H02G 3/08, H02G 3/12, H02G 15/007, H02G 3/06

(54) **ASSEMBLY OF AN INSTALLATION BOX AND ELECTRIC INSTALLATION MATERIAL, AND STRAIN RELIEF INSERT**
ANORDNUNG AUS INSTALLATIONSKASTEN UND ELEKTRISCHEM INSTALLATIONSMATERIAL SOWIE ZUGENTLASTUNGSEINSATZ
ASSEMBLAGE D'UNE BOÎTE D'INSTALLATION ET MATÉRIEL D'INSTALLATION ÉLECTRIQUE ET INSERT DE SOULAGEMENT DE TRACTION

(30) Priority: 26.02.2018 EP 18158570
(43) Date of publication of application: 28.08.2019
(73) Proprietor: ABB Schweiz AG, 5400 Baden (CH)
(72) Inventor: Renckens, Tom, 3742 ND Baarn (NL)
(74) Representative: van Trier, Norbertus Henricus Gerardus

(56) References cited:
- EP-A1- 2 472 685
- EP-A1- 2 520 959
- DE-U1-202010 006 582
- DE-U1-202012 101 639
- US-A- 4 277 641
- US-A- 4 389 535
- US-A1- 2016 238 160

## Description

### BACKGROUND

The invention relates to an assembly of an installation box and electric installation material with at least one electric wire, wherein the installation box comprises a housing with a bottom wall and a circumferential wall upright from the bottom wall, wherein the bottom wall and the circumferential wall together enclose an installation space for electric installation material, wherein an upper edge of the circumferential wall facing away from the bottom wall bounds an installation opening for providing access to the installation space, wherein the circumferential wall is provided with a passage opening for the at least one electric wire or cable to pass there through in an insert direction, wherein the installation box comprises a strain relief above the passage opening.

Such installation boxes are used in electric wirings in commercial and industrial building or in machinery. Cables that are part of the electric wiring need to be connected to each other, and generally speaking this takes place in the installation box by means of splices. The strain relief serves to prevent inadvertent removal of the cable(s) from the installation box. A known strain relief is a cable gland.

A further cable clamp device is known from US 4,277,641 describing an electrical wiring box with attachable clamp for non-metallic sheathed cable comprises, in combination, a wiring box with attachment receiving means for mounting a cable clamp device interior to the box adjacent to a knock-out, and a cable clamp device. The clamp device comprises a base and support members with a hinged resilient flap. Non-metallic sheathed cable is clamped between the flap member and the base member of the clamp device. Attachment means on the clamp device provide for mounting of the clamp device in the attachment receiving means of the wiring box.

In the context of this application, it is understood that the term "wire" is used in a broader meaning, comprising a single wire, coated with an insulating layer or not, and also comprising a cable with one or several wires in it. The term "strain relief" in the context of this application is used in a broader meaning, comprising also a cable retention.

### SUMMARY OF THE INVENTION

A disadvantage of the known strain relief or cable retention is that it is intended for an electric wires or cable with a predetermined thickness. An installation worker, therefore, needs to carry around various strain reliefs in order to be able to install or replace electric wires with various thicknesses.

It is an object of the present invention to eliminate one or more disadvantages of the known strain relief, or to at least provide an alternative strain relief.

According to a first aspect, the invention provides an assembly of an installation box and electric installation material with at least one electric wire, wherein the installation box comprises a housing with a bottom wall and a circumferential wall upright from the bottom wall, wherein the bottom wall and the circumferential wall together enclose an installation space for electric installation material, wherein an upper edge of the circumferential wall facing away from the bottom wall bounds an installation opening for providing access to the installation space, wherein the circumferential wall is provided with a passage opening for the at least one electric wire or cable to pass there through in an insert direction, wherein the installation box further comprises a strain relief insert inserted into the installation space and installed at the passage opening, wherein the strain relief insert is provided with a strain relieving or cable retention member having a strain relieving or cable retention body extending substantially parallel to the insert direction, and a fastener for receiving and fastening the at least one electric wire or cable to the strain relieving or cable retention member, wherein the fastener surrounds the at least one electric wire or cable and the strain relieving or cable retention member.

During use, an electric wire or cable is placed against the strain relieving or cable retention member of the strain relief insert. The wire or the cable can be connected to a connector. The connector can be applied at a free end of the wire or cable which is reaching into the installation space. This makes it possible to assemble units which are "plug and play".

Subsequently, the fastener, for example a cable tie or a ty-rap, is positioned and tightened around the electric wire or cable and the strain relieving or cable retention member, thereby fastening the electric wire or cable firmly to the strain relieving or cable retention member. Since the electric wire or cable is fastened to the strain relief or cable retention insert, any strain applied to the electric wire or cable is also applied to the strain relief insert and the installation box into which the strain relief insert is inserted. The strain applied to the electric wire or cable therefore is absorbed by the strain relief insert and the installation box. Thus, any strain applied to the electric wire or cable will be relieved by means of the strain relief insert. An advantage of the invention is that a strain relief insert is provided to which any electric wire or cable can be fastened by the fastener, as long as the electric wire or cable is able to pass through the passage opening.

It is noted that in the context of the present patent application, surrounding the strain relieving or cable retention member also has to be understood as the fastener surrounding a part of the strain relieving or cable retention member.

According to the first aspect of the invention, the strain relieving or cable retention member comprises a strain relieving or cable retention portion configured for receiving at least a part of the fastener and for substantially preventing movement of the fastener in at least one direction substantially parallel to the insert direction. Preferably the strain relieving or cable retention portion is configured for substantially fixating the fastener to the strain relieving or cable retention member. Since movement of the fastener is substantially prevented by the strain relieving or cable retention portion, it is substantially prevented that the fastener and therewith the electric wire or cable move with respect to the strain relieving or cable retention member due to a strain applied to the electric wire. Movement of the fastener is counteracted by the strain relieving or cable retention portion. An advantage of this embodiment is that any possible movement of the fastener due to strain applied to the electric wire or cable is absorbed by the strain relief insert and the installation box via the strain relieving or cable retention portion.

Another advantage of this embodiment is that a strain relief insert is provided which is capable for relieving the strain when the electric wire or cable is pushed towards the installation space and when the electric wire or cable is pulled from the installation. The strain relief insert thus provides a bi-directional (push and pull) strain relief for the electric wire.

According to the first aspect of the invention, the strain relieving or cable retention portion comprises a first protrusion extending substantially transversal to the insert direction from the strain relieving or cable retention body. The strain relieving or cable retention portion comprises a second protrusion extending substantially transversal to the insert direction from the strain relieving or cable retention body. The second protrusion is distanced from and parallel to the first protrusion. A receiving space for receiving a part of the fastener is defined between the first and the second protrusions. When the fastener is received within the receiving space, movement of the fastener parallel or substantially parallel to the insert direction is prevented or limited by the first and the second protrusions. When movement of the fastener is stopped by one of the first and second protrusions, the movement of the fastener is absorbed by the strain relief insert and, thus, by the installation box. An advantage of this embodiment is that a bi-directional strain relief is provided to which the fastener is connectable relatively simple.

It is noted that in the context of the present patent application, a recess provided at an outer contour of the strain relieving or cable retention member is considered to be located between and confined by the first protrusion and the second protrusion.

In an embodiment the strain relief insert further comprises an insert body having an insert opening defined therein, wherein the insert opening is bounded by an insert opening edge and the strain relieving or cable retention member is connected to the insert body. In an embodiment thereof the strain relieving or cable retention member is moveable between a closed position, in which the strain relieving or cable retention member blocks the passage opening at least partially, and an open position, in which the strain relieving or cable retention member extends substantially parallel to the insert direction. An advantage of this embodiment is that access to the installation space via the passage opening is limited when no electric wire or cable is fastened to the strain relieving or cable retention member. Additionally, the strain relieving or cable retention member is substantially in line with the circumferential wall of the installation box when the strain relieving or cable retention member is in the closed position. This is advantageous, as the strain relieving or cable retention member substantially does not protrude beyond the contour of the installation box, when the strain relieving or cable retention member is in the closed position. The risk of unintentionally breaking the strain relieving or cable retention member is therewith reduced.

In an embodiment the strain relieving or cable retention body has a first side and a second side opposite to the first side in the longitudinal direction thereof, wherein the strain relieving or cable retention body at the first side thereof is hingeably connected to the insert opening edge, wherein when the strain relieving or cable retention member is in the closed position, the strain relieving or cable retention member at least partially blocks the insert opening. In an embodiment thereof a hinge, preferably a living hinge, is provided between the strain relieving or cable retention body and the opening edge in order to connect to strain relieving or cable retention member hingeably to the insert opening edge. The connection of the strain relieving or cable retention member or cable retention member with a hinge or living hinge makes it possible for the cable or wire already fixed to the strain relieving or cable retention member or cable retention member to be turned downwards, in the direction of the bottom wall, in order for the installation box with wire or cable already fixed to the strain relieving or cable retention member or cable retention member to be inserted into the hole in the hollow wall.

Installation boxes often can be made by injection molding or 3D printing. By connecting the strain relieving or cable retention body to the insert opening edge by means of a living hinge, the strain relief insert also is manufacturable by means of injection molding or 3D printing, wherein the strain relief insert advantageously can be manufactured at once.

In an embodiment the installation box comprises one or more breakable securing elements provided between and connected to the strain relieving or cable retention body and the insert opening edge, when the strain relieving or cable retention member is in the closed position. Preferably the one or more breakable securing elements are breakable material bridges. An advantage of this embodiment that the strain relieving or cable retention member is prevented from moving to the open position undesired, wherein the securing elements can be broken when it is desired to move the strain relieving or cable retention member to the open position.

In an embodiment the strain relieving or cable retention body has a contact surface configured for contacting the electric wire or cable fastened to the strain relieving or cable retention member. Preferably the contact surface is provided with friction elements for providing friction between the contact surface and the electric wire or cable fastened to the strain relieving or cable retention body. In an embodiment thereof the friction elements comprise a first array of teeth, wherein the first array of teeth extends in a direction substantially parallel to the insert direction. Preferably the friction elements comprise a second array of teeth parallel to the first array of teeth. Because of the electric wire or cable being fastened to the strain relieving or cable retention member, at least a part of the electric wire or cable is forced against the first array of teeth and the second array of teeth. When the electric wire or cable is fastened to the strain relieving or cable retention member, a pulling force or a pushing force may be applied to the electric wire. Due to the frictional contact between the electric wire or cable and the first and second arrays of teeth, the risk of the electric wire or cable moving with respect to the strain relieving or cable retention member is reduced, or in the ideal case eliminated.

In an embodiment a first flange and a second flange are provided at a first side of the insert body, preferably line symmetrical to each other, and projecting from the first side, preferably wherein the first and second flanges are complementary to at least a part of a passage opening edge bounding the passage opening. When the strain relief insert is arranged within the installation space and installed at the passage opening, the first and second flanges face the passage opening edge of the passage opening. An advantage of this embodiment is that the orientation of the strain relief insert with respect to the circumferential wall and the bottom wall is maintained as the strain relief insert is prevented from rotating around a rotation axis substantially parallel to the insert direction by the first and second flanges impinging against the passage opening edge.

In an embodiment the insert body is provided with at least a first latching cam adapted for latching the strain relief insert within the installation space and at the passage opening, preferably wherein the first latching cam projects from a first side of the insert body and faces a passage opening edge bounding the passage opening. When the strain relief insert is arranged within the installation space and installed at the passage opening, the first latching cam is located adjacent to the passage opening edge, such that the first latching cam advantageously prevents the strain relief insert from being removed unintentionally from the passage opening and from being pushed into the installation space unintentionally.

In an embodiment the strain relief insert comprises two or more, preferably three or more strain relief members. Preferably the strain relief members are arranged substantially parallel to each other. An advantage of this embodiment is that two or more parallel electric wires can be inserted into the installation space of the installation box parallel to each other and passing through a single passage opening, wherein each of the electric wires is connected to a separate strain relieving or cable retention member.

According to a second aspect, the invention provides a method for installing an electric wire or cable in an installation box, wherein the installation box comprises a housing with a bottom wall and a circumferential wall upright from the bottom wall, wherein the bottom wall and the circumferential wall together enclose an installation space for electric installation material, wherein an upper edge of the circumferential wall facing away from the bottom wall bounds an installation opening for providing access to the installation space, wherein the circumferential wall is provided with a passage opening for at least one electric wire or cable to pass there through in an insert direction, the installation box further comprising a strain relief insert inserted into the installation space and installed at the passage opening, wherein the strain relief insert is provided with a strain relieving or cable retention member having a strain relieving or cable retention body extending substantially parallel to the insert direction, and a fastener for receiving and fastening at least one electric wire or cable to the strain relieving or cable retention member, wherein the strain relieving or cable retention member further comprises a strain relieving or cable retention portion configured for receiving at least a part of the fastener and for substantially preventing movement of the fastener in at least one direction substantially parallel to the insert direction, wherein the strain relieving or cable retention portion is configured for substantially fixating the fastener to the strain relieving or cable retention member, wherein the strain relieving or cable retention portion comprises a first protrusion extending substantially transversal to the insert direction from the strain relieving or cable retention body and a second protrusion extending substantially transversal to the insert direction from the strain relieving or cable retention body, wherein the second protrusion is distanced from and parallel to the first protrusion, wherein a receiving space is defined between the first and second protrusions, wherein the method comprises the steps of:
- inserting an electric wire or cable into the installation space of the installation box; and
- optionally, connecting the electric wire or cable to electric installation material within the installation space of the installation box;
wherein the method further comprises the steps of;
- placing the electric wire or cable against the strain relieving or cable retention member of the strain relief insert; and
- fastening the electric wire or cable to the strain relieving or cable retention member by surrounding the electric wire or cable and the strain relieving or cable retention member by a fastener and tightening the fastener, wherein a part of the fastener is received within the receiving space.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows an isometric view of an installation box according to an embodiment of the invention without its strain relief insert;
Figure 2A show an isometric view of an installation box with its strain relief insert according to an embodiment of the invention, and an exploded view of the installation box of figure 2A, respectively;
Figure 3A - 3B show isometric views of the strain relief insert as shown in figure 2B; and
Figure 4 shows an isometric view of the installation box of figure 1 with an electric wire or cable fastened thereto.

### DETAILED DESCRIPTION OF THE INVENTION

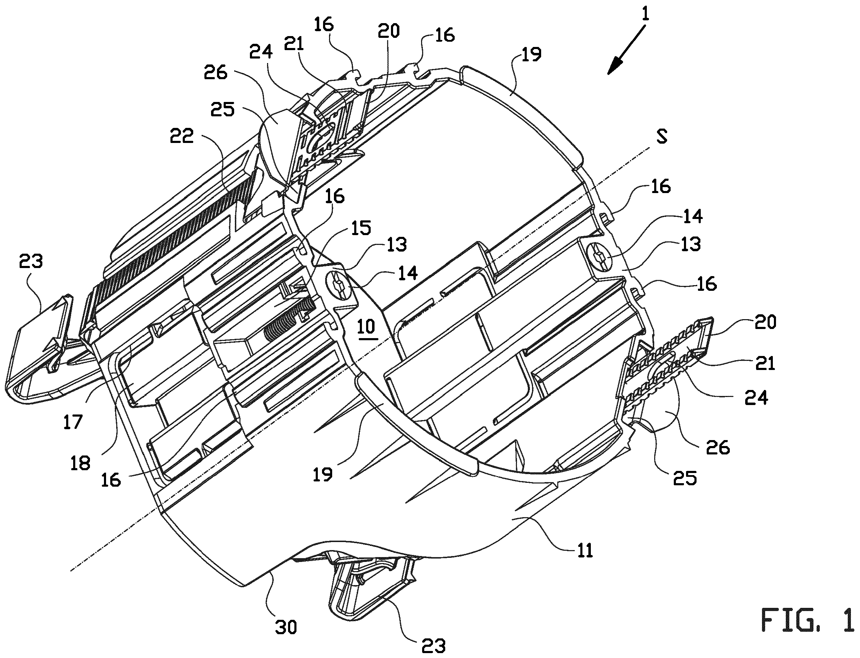

Figure 1 shows an installation box 1 without its strain relief insert 2 being inserted therein according to an embodiment of the invention. The installation box 1 comprises a bottom wall 10 and a straight cylindrical circumferential wall 11 with central axis S. The circumferential wall 11 has an upper edge 12 which bounds an installation opening of the installation box 1. The bottom wall 10 and the circumferential wall 11, which together confine an installation space, are made of plastic, in this example polypropylene, and form one rigid unity.

As best shown in figure 1, the installation box 1 comprises two opposite mounting plates 13 adjacent to the upper edge 12 in which mounting screws 14 are screwed. The mounting screws 14 extend through recessed channels 15 behind the mounting plates 13. At the same locations and in circumferential direction also in between the installation box 1 is provided with slide couplings 16 on the circumferential wall 11 to couple multiple installation boxes 1 adjacent to each other in different configurations. Below the slide couplings 16, the circumferential wall 11 is provided with square passages 17 that are closed off with breakout ports 18 which are removed for electric wirings between the coupled installation boxes 1. The installation box 1 is provided with first flanges 19 that form one unity with and that project from the circumferential wall 11 to engage onto a non-shown front plate of a non-shown hollow wall.

The installation box 1 is provided with two identical anchoring strips 20 for anchoring the installation box 1 in the front plate of the hollow wall. The anchoring strips 20 are located opposite to each other and in circumferential direction at 85 to 95 degrees with respect to the opposite first flanges 19 and at about 40 degrees with respect to the mounting screws 14. The anchoring strips 20 are made of a plastic with high tension strength, in particular POM (Polyoxymethylene), and comprise an elongate gripping section 21 that rectilinearly continues into an elongate tensioning section 22. At the opposite end the tensioning section 22 is connected to an anchoring section 23. The gripping section 21 comprises a hole 24 in the middle thereof for insertion of a pulling tool, such as a screwdriver. As best shown in figure 1, the installation box 1 comprises two guide channels 25 in the circumferential wall 11 in which the anchoring strips 20 are received. The anchoring strips 20 are locked by means of barbed metal inserts 26.

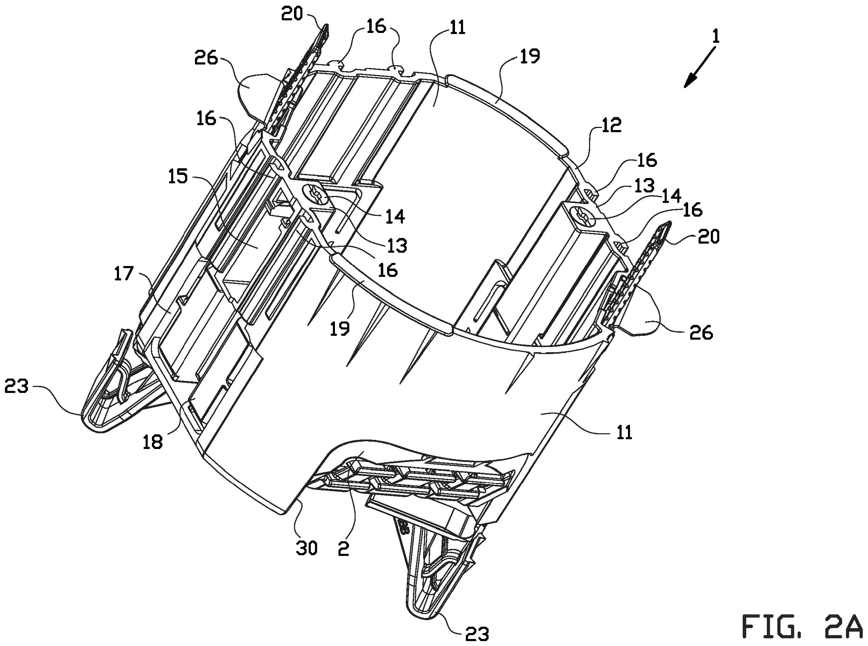

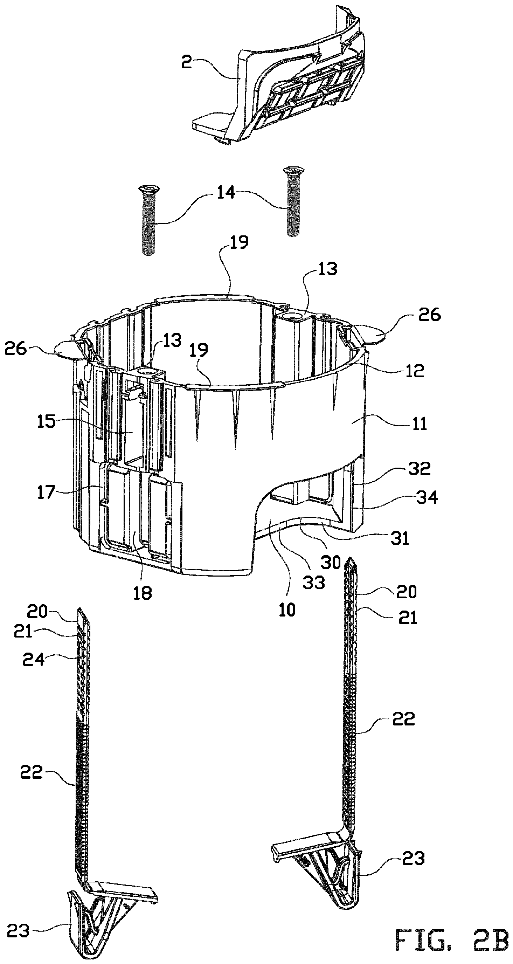

Figure 2A shows the installation box 1 in which the strain relief insert 2 is inserted. The installation box 1 is designed to be installed in a non-shown hollow wall of a building to install the electrical installation thereof. When the installation box 1 is inserted and secured into a circular hole in the front plate of the hollow wall, the installation box 1 is anchored by means of the anchoring strips 20. As schematically shown in figure 2B, the strain relief insert 2 is configured for being installed in the longitudinal direction of the central axis S in the installation space and in particular at a passage opening 30 within the circumferential wall 11 and the bottom wall 10.

As shown in figure 1 a passage opening 30 is provided within the bottom wall 10 and the circumferential wall 11 for receiving the strain relief insert 2. The passage opening 30 includes a bottom wall opening 31 and a circumferential wall opening 32, which are merged into one another. The bottom wall opening 31 is bounded by a bottom wall edge 33 and the circumferential wall opening 32 is bounded by a circumferential wall edge 34.

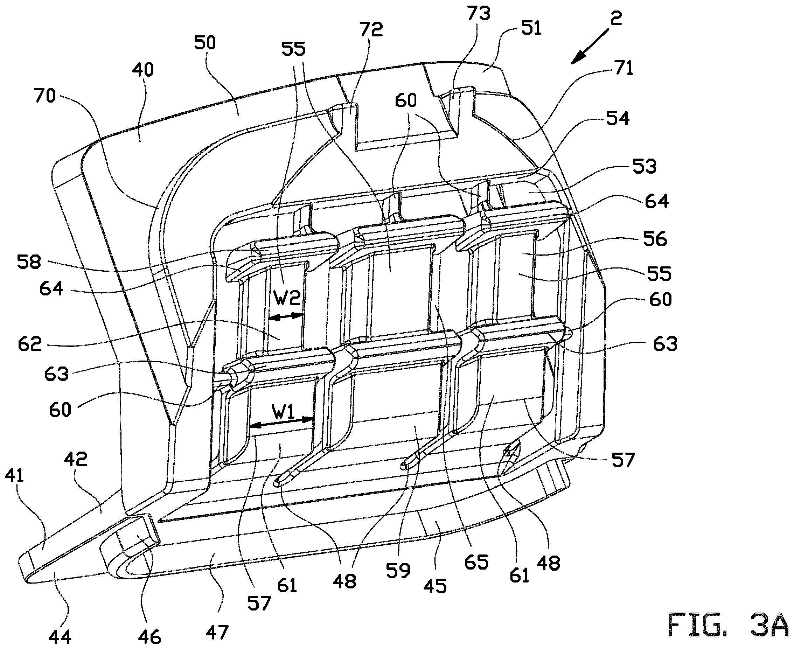

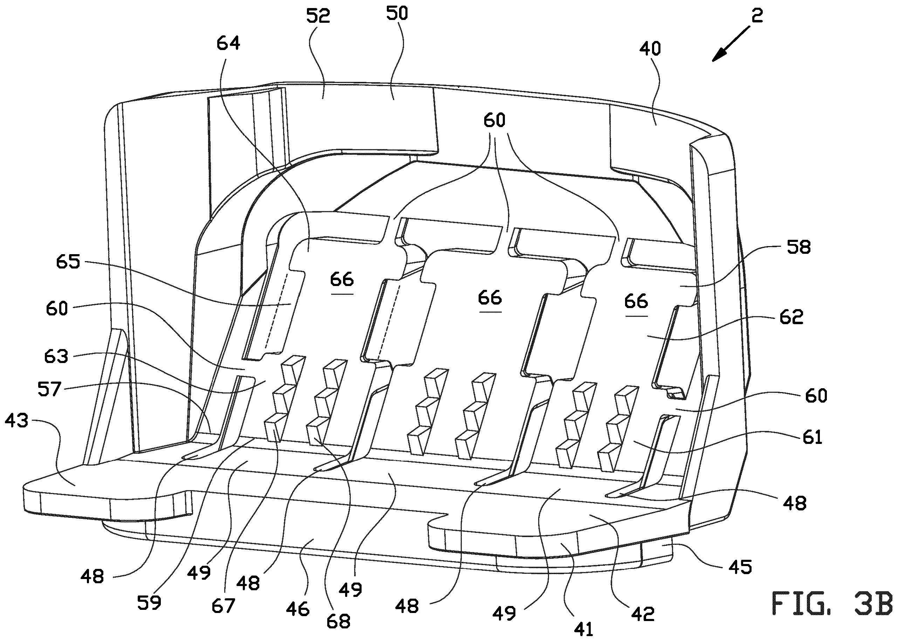

As shown in figures 3A and 3B the strain relief insert 2 is provided with an insert body having a wall part 40 and a bottom part 41, preferably made of polypropylene. The wall part 40 and the bottom part 41 are orientated substantially transversal to each other. The bottom part 41 comprises a bottom body 42 with an upper side 43 and a lower side 44 opposite to the upper side 43. A ridge 45 is provided at the lower side 44 of the bottom body 42, which ridge 45 has a first side 46 and a second side 47. When the strain relief insert 2 is inserted into the opening 30 of the installation box, a part of the lower side 44 of the bottom part 41 abuts on a surface of the bottom wall 10 of the installation box 1. The ridge 45 is positioned within the bottom wall opening 31, whereby the first side 46 of the ridge 45 faces the bottom wall edge 33 and is complementary thereto.

As shown in figures 3A and 3B a number of slots 48 are provided within the bottom body 42 near the wall part 40, which slots 48 are parallel to and at a distance to each other. A number of connecting segments 49 are defined by and between each pair of slots 48, wherein the connecting segments 49 define at least a part of the bottom wall edge 33.

The wall part 40 includes a wall body 50 having a first side 51 and a second side 52 opposite to the first side 51. An insert opening 53 is provided within the wall body 50 for at least one non-shown electric wire or cable to pass through the strain relief insert 2. The insert opening 53 is bound by an insert opening edge 54. As shown in figures 3A - 3B three strain relieving or cable retention members 55 are provided within the insert opening 53 and substantially parallel to each other. Each of the strain relieving or cable retention members 55 comprises a strain relieving or cable retention body 56 having a first side 57 and a second side 58 opposite to the first side 57. Each of the strain relieving or cable retention members 55 is hingeably connected to one of the connecting segments 49 by means of a hinge 59, in particular a living hinge 59. The strain relieving or cable retention body 56 of each strain relieving or cable retention member 55 is secured to the opening edge 54 by means of one or more breakable securing elements 60, in particular breakable material bridges 60, extending between the strain relieving or cable retention body 56 and the opening edge 54. The strain relieving or cable retention members 55 are maintained in a closed position in which each of the strain relieving or cable retention members 55 blocks at least a part of the insert opening 53, as best shown in figures 3A - 3B.

As shown in figures 3A - 3B the strain relieving or cable retention body 56 of each of the strain relieving or cable retention members 55 includes a first body part 61 and a second body part 62. The first body part 61 has a width W1 which is larger than a width W2 of the second body part 62. The first body part 61 is provided with a first flange-shaped protrusion 63 which partially extends around the first body part 61 as shown in figures 3A- 3B. The first flange-shaped protrusion 63 is arranged where the first body part 61 and the second body part 62 meet. The second body part 62 has a second flanged-shaped protrusion 64 which partially extends around the circumference of the second body part 62 as shown in figures 3A - 3B. The second flange-shaped protrusion 64 is arranged at the second side 58 of the strain relieving or cable retention member 56. At each strain relieving or cable retention member 55, a receiving space 65, also called strain relieving or cable retention portion, is defined between and confined by the first and second flange-shaped protrusions 63, 64.

As shown in figure 3B each of the strain relieving or cable retention members 55 has a contact surface 66, which in the first position of the respective strain relieving or cable retention member 55 faces the installation space of the installation box 1. The contact surface 66 of each strain relieving or cable retention member 55 is configured for contacting a non-shown electric wire or cable inserted into the installation box 1. A first array 67 of teeth and a second array 68 of teeth are arranged parallel to each other at the contact surface 66 of each strain relieving or cable retention member 56.

As shown in figure 3B the wall part 40 is provided with a first curved flange 70 and a second curved flange 71. The first and second flanges 70, 71 are provided at the first side 51 of the wall body 50 of the wall part 40 and are arranged line symmetrical with respect to each other. When the strain relief insert 2 is inserted into the installation box 1 and in particular at the passage opening 30, the first and second flanges 70, 71 are located adjacent to the circumferential wall edge 34. As shown in figure 2A, the circumferential wall edge 34 and the first and second flanges 70, 71 are substantially complementary or complementary to each other. At the facing ends of the first and second flanges 70, 71, a first latching cam 72 is provided at the respective end of the first curved flange 70 and a second latching cam 73 is provided at the respective end of the second curved flange 71. The first and second latching cams 72, 73 project from the first side 51 of the wall body 50 and beyond each of the first and second curved flanges 70, 71. When the strain relief insert 2 is inserted into the installation box 1 and in particular at the passage opening 30, the first and second latching cams 72, 73 are located adjacent to the circumferential wall edge 34 in order to prevent the strain relief insert 2 from being removed unintentionally from the passage opening 30 and from being pushed unintentionally into the installation space of the installation box 1. As shown in figures 3A - 3B a pushing space or a pushing surface is defined between the first and second latching cams 72, 73 where a user can apply a pushing force to overcome latching by the first and second latching cams 72, 73 and to push the strain relief insert 2 into the installation space of the installation box 1.

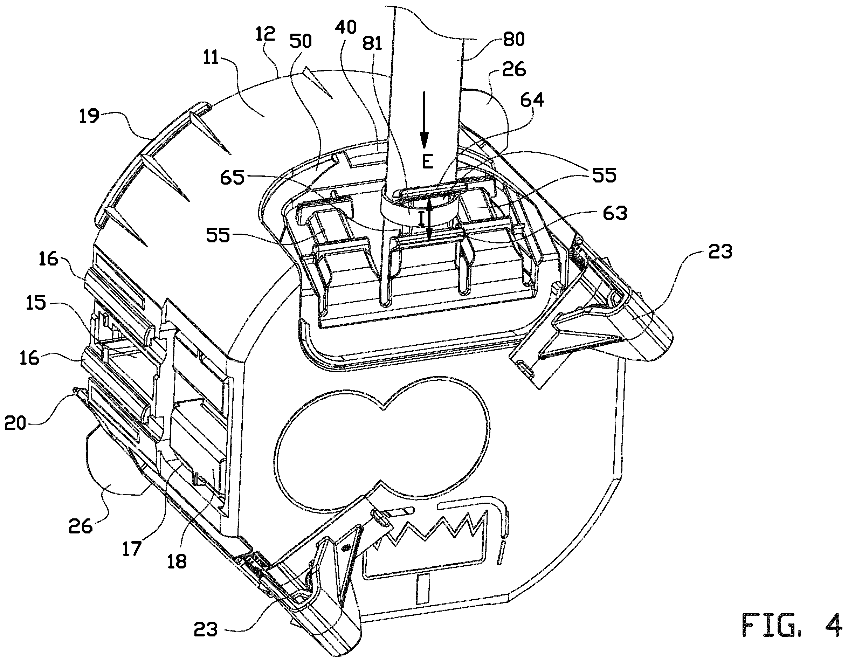

The installation box 1 with its strain relief insert 2 inserted into the installation space thereof and an electric wire or cable 80 attached to a respective strain relieving or cable retention member 55 of the strain relief insert 2 is shown in figure 4. In order to attach the electric wire or cable 80 to the strain relieving or cable retention member 55, the one or more breakable securing elements 60 between the respective strain relieving or cable retention member 55 and the opening edge 54 of the insert opening 53 are broken firstly. Secondly, the respective strain relieving or cable retention member 55 is moved from the closed position, as for example shown in figure 3A , to an open position, as shown in figure 4. When the respective strain relieving or cable retention member 55 is in the open position, the respective strain relieving or cable retention member 55 is extending substantially parallel or parallel to an insert direction E of the electric wire or cable 80. Subsequently, the electric wire or cable 80 is placed at the respective strain relieving or cable retention member 55 and in particular placed against the contact surface 66 of the respective strain relieving or cable retention member 55. As the electric wire or cable 80 is placed at the contact surface 66, a part of the outer surface of the electric wire or cable 80 abuts on the first array 67 of teeth and the second array 68 of teeth. At last, a fastener 81, for example a cable tie or a ty-rap, is placed around the electric wire or cable 80 and the strain relieving or cable retention member 55, and tightened for fastening the electric wire or cable 80 firmly to the respective strain relieving or cable retention member 55. By tightening the fastener 81 around the electric wire or cable 80 and the respective strain relieving or cable retention member 55, the electric wire or cable 80 is forced against the first array 67 of teeth and the second array 68 of teeth, such that the first and second array 67, 68 of teeth engage the electric wire or cable 80.

As shown in figure 4 the fastener 81 is received within the receiving space 65 defined between and confined by the first and second flange-shaped protrusions 63, 64. When a pulling or a pushing force is applied to the electric wire or cable 80 in a direction substantially parallel or parallel to the insert direction E, the pulling or pushing force is transferred, at least partially, to the strain relief insert 2 due to the fastener 81 being tightened around the electric wire or cable 80 and the respective strain relieving or cable retention member 55. Because of the fastener 81 being fixated by the first and second flange-shaped protrusions 63, 64, movement of the fastener 81 within the receiving space 65 in a receiving direction I substantially parallel or parallel to the insert direction E is prevented or substantially prevented. Movement of the fastener 81 in the receiving direction I is counteracted by the first and second flange-shaped protrusions 63, 64, in particular movement of the fastener 81 in the receiving direction I due to a pulling force applied to the electric wire or cable 80 is delimited by the second flange-shaped protrusion 64 and movement of the fastener 81 in the receiving direction I due to a pushing force applied to the electric wire or cable 80 is delimited by the first flange-shaped protrusion 63. Additionally, any movement of the electric wire or cable 80 in the insert direction E or opposite thereto is counteracted, at least partially, by the first and second array 67, 68 of teeth against which the electric wire or cable 80 is forced by means of the fastener 81. The strain relief insert 2, therefore, provides a bi-directional (push and pull) strain relief for the electric wire or cable 80.

It is to be understood that the above description is included to illustrate the operation of the preferred embodiments and is not meant to limit the scope of the invention. From the above discussion, many variations will be apparent to one skilled in the art that would yet be encompassed by the scope of the present invention

## Claims

1. Assembly of an installation box (1) and electric installation material with at least one electric wire or cable (80), wherein the installation box comprises a housing with a bottom wall (10) and a circumferential wall (11) upright from the bottom wall (10), wherein the bottom wall (10) and the circumferential wall (11) together enclose an installation space for electric installation material, wherein an upper edge (12) of the circumferential wall (11) facing away from the bottom wall (10) bounds an installation opening for providing access to the installation space, wherein the circumferential wall (11) is provided with a passage opening (30) for the at least one electric wire or cable (80) to pass there through in an insert direction (E), wherein the installation box further comprises a strain relief or cable retention insert (2) inserted into the installation space and installed at the passage opening (30), wherein the strain relief or cable retention insert (2) is provided with a strain relieving or cable retention member (55) having a strain relieving or cable retention body (56) extending substantially parallel to the insert direction (E), and a fastener (81) for receiving and fastening the at least one electric wire or cable (80) to the strain relieving or cable retention member (55), wherein the fastener (81) surrounds the at least one electric wire or cable (80) and the strain relieving or cable retention member(55), wherein the strain relieving or cable retention member (55) further comprises a strain relieving or cable retention portion (63, 64, 65) configured for receiving at least a part of the fastener (81) and for substantially preventing movement of the fastener (81) in at least one direction substantially parallel to the insert direction (E), wherein the strain relieving or cable retention portion (63, 64, 65) is configured for substantially fixating the fastener (81) to the strain relieving or cable retention member (55), wherein the strain relieving or cable retention portion comprises a first protrusion (63) extending substantially transversal to the insert direction (E) from the strain relieving or cable retention body (56) and a second protrusion (64) extending substantially transversal to the insert direction (E) from the strain relieving or cable retention body (56), wherein the second protrusion (64) is distanced from and parallel to the first protrusion (63), wherein a receiving space (65) is defined between the first and second protrusions (63, 64), within which a part of the fastener (81) is received.

2. Assembly according to any one of the preceding claims, wherein the strain relief insert (2) further comprises an insert body (40, 41) having an insert opening defined therein, wherein the insert opening (53) is bounded by an insert opening edge (54) and the strain relieving or cable retention member (55) is connected to the insert body (40, 41).

3. Assembly according to any one of the preceding claims, wherein the strain relieving or cable retention member (55) is moveable between a closed position, in which the strain relieving or cable retention member (55) blocks the passage opening (30) at least partially, and an open position, in which the strain relieving or cable retention member (55) extends substantially parallel to the insert direction (E).

4. Assembly according to claim 2 and claim 3, wherein the strain relieving or cable retention body (56) has a first side (57) and a second side (58) opposite to the first side (57) in the longitudinal direction thereof, wherein the strain relieving or cable retention body (56) at the first side (57) thereof is hingeably connected to the insert opening edge (54), wherein when the strain relieving or cable retention member (55) is in the closed position, the strain relieving or cable retention member (55) at least partially blocks the insert opening (53).

5. Assembly according to claim 4, wherein a hinge, preferably a living hinge (59), is provided between the strain relieving or cable retention body (56) and the insert opening edge (54) in order to connect to strain relieving or cable retention member (55) hingeably to the insert opening edge (54).

6. Assembly according to claim 3, 4 or 5, when dependent on claim 2, further comprising one or more breakable securing elements (60) provided between and connected to the strain relieving or cable retention body (56) and the insert opening edge (54), when the strain relieving or cable retention member (55) is in the closed position, preferably wherein the one or more breakable securing elements (60) are breakable material bridges.

7. Assembly according to any one of the preceding claims, wherein the strain relieving or cable retention body (56) has a contact surface (66) configured for contacting the electric wire or cable (80) fastened to the strain relieving or cable retention member (55), preferably wherein the contact surface (66) is provided with friction elements (67; 68) for providing friction between the contact surface and the electric wire or cable fastened to the strain relieving or cable retention body.

8. Assembly according to claim 7, wherein the friction elements (67; 68) comprise a first array (67) of teeth, wherein the first array (67) of teeth extends in a direction substantially parallel to the insert direction (E), preferably wherein the friction elements (67; 68) comprise a second array (68) of teeth parallel to the first array (67) of teeth.

9. Assembly according to any one of the preceding claims, when dependent on claim 2, wherein a first flange (70) and a second flange (71) are provided at a first side (51) of the insert body (40, 41), preferably line symmetrical to each other, and projecting from the first side (51), preferably wherein the first and second flanges (70; 71) are complementary to at least a part of a passage opening edge (33, 34) bounding the passage opening (30) .

10. Assembly according to any one of the preceding claims, when dependent on claim 2, wherein the insert body (40, 41) is provided with at least a first latching cam (72) adapted for latching the strain relief insert (2) within the installation space and at the passage opening (30), preferably wherein the first latching cam (71) projects from a first side (51) of the insert body (40, 41) and faces a passage opening edge (33, 34) bounding the passage opening (30).

11. Assembly according to any one of the preceding claims, wherein the strain relief insert (2) comprises two or more, preferably three or more strain relief members (55), preferably wherein the strain relief members (55) are arranged substantially parallel to each other.

12. Method for installing an electric wire or cable (80) in an installation box (1), wherein the installation box comprises a housing with a bottom wall (10) and a circumferential wall (11) upright from the bottom wall (10), wherein the bottom wall (10) and the circumferential wall (11) together enclose an installation space for electric installation material, wherein an upper edge (12) of the circumferential wall (11) facing away from the bottom wall (10) bounds an installation opening for providing access to the installation space, wherein the circumferential wall (11) is provided with a passage opening (30) for at least one electric wire or cable (80) to pass there through in an insert direction (E), the installation box (1) further comprising a strain relief insert (2) inserted into the installation space and installed at the passage opening (30), wherein the strain relief insert (2) is provided with a strain relieving or cable retention member (55) having a strain relieving or cable retention body (56) extending substantially parallel to the insert direction (E), and a fastener (81) for receiving and fastening at least one electric wire or cable (80) to the strain relieving or cable retention member (55), wherein the strain relieving or cable retention member (55) further comprises a strain relieving or cable retention portion (63, 64, 65) configured for receiving at least a part of the fastener (81) and for substantially preventing movement of the fastener (81) in at least one direction substantially parallel to the insert direction (E), wherein the strain relieving or cable retention portion (63, 64, 65) is configured for substantially fixating the fastener (81) to the strain relieving or cable retention member (55), wherein the strain relieving or cable retention portion comprises a first protrusion (63) extending substantially transversal to the insert direction (E) from the strain relieving or cable retention body (56) and a second protrusion (64) extending substantially transversal to the insert direction (E) from the strain relieving or cable retention body (56), wherein the second protrusion (64) is distanced from and parallel to the first protrusion (63), wherein a receiving space (65) is defined between the first and second protrusions (63, 64), wherein the method comprises the steps of:
- inserting an electric wire or cable (80) into the installation space of the installation box (1); and
- optionally, connecting the electric wire or cable (80) to electric installation material within the installation space of the installation box (1) ;
wherein the method further comprises the steps
of:
- placing the electric wire or cable (80) against the strain relieving or cable retention member (55) of the strain relief insert (2); and
- fastening the electric wire or cable (80) to the strain relieving or cable retention member (55) by surrounding the electric wire or cable (80) and the strain relieving or cable retention member (55) by a fastener (81) and tightening the fastener (81), wherein a part of the fastener (81) is received within the receiving space.

## Patentansprüche

1. Anordnung einer Installationsdose (1) und elektrischen Installationsmaterials mit wenigstens einem elektrischen Draht oder Kabel (80), wobei die Installationsdose ein Gehäuse mit einer Bodenwand (10) und einer aufrecht auf der Bodenwand (10) stehenden Umfangswand (11) aufweist, wobei die Bodenwand (10) und die Umfangswand (11) zusammen einen Installationsraum für elektrisches Installationsmaterial einschließen, wobei ein oberer Rand (12) der Umfangswand (11), der von der Bodenwand (10) weg weist, eine Installationsöffnung begrenzt, die einen Zugang zu dem Installationsraum liefert, wobei die Umfangswand (11) mit einer Durchgangsöffnung (30) versehen ist, durch die der wenigstens eine elektrische Draht oder das Kabel (80) in einer Einführrichtung (E) gelangen kann, wobei die Installationsdose ferner einen Zugentlastungs- oder Kabelhaltereinsatz (2) umfasst, der in den Installationsraum eingeführt und an der Durchgangsöffnung (30) installiert ist, wobei der Zugentlastungs- oder Kabelhalteeinsatz (2) mit einem Zugentlastungs- oder Kabelhalteelement (55) versehen ist, das einen Zugentlastungs- oder Kabelhaltekörper (56) hat, der im Wesentlichen parallel zu der Einführöffnung (E) verläuft, sowie ein Befestigungselement (81) zur Aufnahme und zum Befestigen des wenigstens einen elektrischen Drahts oder Kabels (80) an dem Zugentlastungs- oder Kabelhalteelement (55), wobei das Befestigungselement (81) den wenigstens einen elektrischen Draht oder das Kabel (80) und das Zugentlastungs- oder Kabelhalteelement (55) umgibt, wobei das Zugentlastungs- oder Kabelhalteelement (55) ferner einen Zugentlastungs- oder Kabelhalteabschnitt (63, 64, 65) umfasst, der ausgestaltet ist zur Aufnahme wenigstens eines Teils des Befestigungselements (81) und zum im Wesentlichen verhindern einer Bewegung des Befestigungselements (81) in wenigstens einer Richtung, im Wesentlichen parallel zu der Einführrichtung (E), wobei der Zugentlastungs- oder Kabelhalteabschnitt (63, 64, 65) ausgestaltet ist, um im Wesentlichen das Befestigungselement (81) an dem Zugentlastungs- oder Kabelhalteelement (55) zu fixieren, wobei der Zugentlastungs- oder Kabelhalteabschnitt eine erste Vorwölbung (63) umfasst, die im Wesentlichen transversal zu der Einführrichtung (E) von dem Zugentlastungs- oder Kabelhaltekörper (56) verläuft, sowie eine zweite Vorwölbung (64), die im Wesentlichen transversal zu der Einführrichtung (E) von dem Zugentlastungs- oder Kabelhaltekörper (56) verläuft, wobei die zweite Vorwölbung (64) von der ersten Vorwölbung (63) beabstandet und zu dieser parallel ist, wobei ein Aufnahmeraum (65) definiert ist zwischen der ersten und zweiten Vorwölbung (63, 64), innerhalb dem ein Teil des Befestigungselements (81) aufgenommen ist.

2. Anordnung nach einem der vorstehenden Ansprüche, wobei der Zugentlastungseinsatz (2) ferner einen Einsatzkörper (40, 41) umfasst, in dem eine Einsatzöffnung definiert ist, wobei die Einsatzöffnung (53) begrenzt ist durch einen Einsatzöffnungsrand (54) und das Zugentlastungs- oder Kabelhalteelement (55) mit dem Einsatzkörper (40, 41) verbunden ist.

3. Anordnung nach einem der vorstehenden Ansprüche, wobei das Zugentlastungs- oder Kabelhalteelement (55) bewegbar ist zwischen einer geschlossenen Position, in welcher das Zugentlastungs- oder Kabelhalteelement (55) die Durchgangsöffnung (30) zumindest teilweise blockiert und einer offenen Position, in welcher das Zugentlastungs- oder Kabelhalteelement (55) sich im Wesentlichen parallel zu der Einführrichtung (E) erstreckt.

4. Anordnung nach Anspruch 2 und Anspruch 3, wobei der Zugentlastungs- oder Kabelhaltekörper (56) eine erste Seite (57) und eine der ersten Seite (57) in deren Längsrichtung gegenüberliegende zweite Seite (58) hat, wobei der Zugentlastungs- oder Kabelhaltekörper (56) an seiner ersten Seite (57) schwenkbar mit dem Einsatzöffnungsrand (54) verbunden ist, wobei das Zugentlastungs- oder Kabelhalteelement (55) zumindest teilweise die Einsatzöffnung (53) blockiert, wenn sich das Zugentlastungs- oder Kabelhalteelement (55) in der geschlossenen Position befindet.

5. Anordnung nach Anspruch 4, wobei ein Scharnier, vorzugsweise ein Filmscharnier (59) zwischen dem Zugentlastungs- oder Kabelhaltekörper (56) und dem Einsatzöffnungsrand (54) vorgesehen ist, um das Zugentlastungs- oder Kabelhalteelement (55) schwenkbar mit dem Einsatzöffnungsrand (54) zu verbinden.

6. Anordnung nach Anspruch 3, 4 oder 5, wenn abhängig von Anspruch 2, ferner umfassend eines oder mehrere brechbare Sicherungselemente (60), die zwischen dem Zugentlastungs- oder Kabelhaltekörper (56) und dem Einsatzöffnungsrand (54) vorgesehen und verbunden sind, wenn das Zugentlastungs- oder Kabelhalteelement (55) in der geschlossenen Position ist, und wobei vorzugsweise das Eine oder die mehreren brechbaren Sicherungselemente (60) brechbare Materialbrücken sind.

7. Anordnung nach einem der vorstehenden Ansprüche, wobei der Zugentlastungs- oder Kabelhaltekörper (56) eine Kontaktfläche (66) hat, die ausgestaltet ist zum Kontaktieren des elektrischen Drahtes oder Kabels (80), das an dem Zugentlastungs- oder Kabelhalteelement (55) befestigt ist, wobei bevorzugt die Kontaktfläche (66) mit Friktionselementen (67; 68) versehen ist zum Vorsehen einer Reibung zwischen der Kontaktfläche und dem elektrischen Draht oder Kabel, das an dem Zugentlastungs- oder Kabelhaltekörper befestigt ist.

8. Anordnung nach Anspruch 7, wobei die Friktionselemente (67; 68) eine erste Reihe (67) an Zähnen umfassen, wobei die erste Reihe (67) an Zähnen in einer Richtung im Wesentlichen parallel zu der Einführrichtung (E) verläuft, wobei bevorzugt die Friktionselemente (67; 68) eine zweite Reihe (68) an Zähnen, parallel zu der ersten Reihe (67) an Zähnen, umfassen.

9. Anordnung nach wenigstens einem der vorstehenden Ansprüche, wenn abhängig von Anspruch 2, wobei ein erster Flansch (70) und ein zweiter Flansch (71) an einer ersten Seite (51) des Einsatzkörpers (40, 41), vorzugsweise liniensymmetrisch zueinander, vorgesehen sind und von der ersten Seite (51) vorstehen, wobei vorzugsweise der erste und der zweite Flansch (70; 71) wenigstens zu einem Teil eines Durchgangsöffnungsrandes (33, 34) komplementär sind, der die Durchgangsöffnung (30) begrenzt.

10. Anordnung nach einem der vorstehenden Ansprüche, wenn abhängig von Anspruch 2, wobei der Einsatzkörper (40, 41) mit wenigstens einer ersten Rastnase (72) versehen ist, die ausgelegt ist zum Einrasten lassen des Zugentlastungseinsatzes (2) innerhalb des Installationsraums und bei der Durchgangsöffnung (30), wobei vorzugsweise die erste Rastnase (71) von einer ersten Seite (51) des Einsatzkörpers (40, 41) vorsteht und zu einem Durchgangsöffnungsrand (33, 34) weist, der die Durchgangsöffnung (30) begrenzt.

11. Anordnung nach einem der vorstehenden Ansprüche, wobei der Zugentlastungseinsatz (2) zwei oder mehr, vorzugsweise drei oder mehr Zugentlastungselemente (55) umfasst, wobei vorzugsweise die Zugentlastungselemente (55) im Wesentlichen parallel zueinander angeordnet sind.

12. Verfahren zum Installieren eines elektrischen Drahtes oder Kabels (80) in einer Installationsdose (1), wobei die Installationsdose ein Gehäuse mit einer Bodenwand (10) und eine aufrecht auf der Bodenwand (10) stehende Umfangswand (11) aufweist, wobei die Bodenwand (10) und die Umfangswand (11) zusammen einen Installationsraum für elektrisches Installationsmaterial einschließen, wobei ein oberer Rand (12) der Umfangswand (11), der von der Bodenwand (10) weg weist, eine Installationsöffnung zum Vorsehen eines Zugangs zu dem Installationsraums, begrenzt, wobei die Umfangswand (11) mit einer Durchgangsöffnung (30) versehen ist, durch die wenigstens ein elektrischer Draht oder ein Kabel (80) in einer Einführrichtung (E) gelangen kann, wobei die Installationsdose (1) ferner einen Zugentlastungeinsatz (2) umfasst, der in den Installationsraum eingeführt und an der Durchgangsöffnung (30) installiert ist, wobei der Zugentlastungseinsatz (2) mit einem Zugentlastungs- oder Kabelhalteelement (55) versehen ist, das einen Zugentlastungs- oder Kabelhaltekörper (56) hat, der im Wesentlichen parallel zu der Einführrichtung (E) verläuft, sowie ein Befestigungselement (81) zur Aufnahme und Befestigung wenigstens eines elektrischen Drahtes oder Kabels (80) an dem Zugentlastungs- oder Kabelhalteelement (55), wobei das Zugentlastungs- oder Kabelhalteelement (55) ferner einen Zugentlastungs- oder Kabelhalteabschnitt (63, 64, 65) umfasst, der ausgestaltet ist zur Aufnahme wenigstens eines Teils des Befestigungselements (81) und zum im Wesentlichen verhindern einer Bewegung des Befestigungselements (81) in wenigstens eine Richtung, im Wesentlichen parallel zu der Einführrichtung (E), wobei der Zugentlastungs- oder Kabelhalteabschnitt (63, 64, 65) ausgestaltet ist zum im Wesentlichen Fixieren des Befestigungselements (81) an dem Zugentlastungs- oder Kabelhalteelement (55), wobei der Zugentlastungs- oder Kabelhalteabschnitt eine erste Vorwölbung (63) umfasst, die im Wesentlichen transversal zu der Einführrichtung (E) von dem Zugentlastungs- oder Kabelhaltekörper (56) verläuft, sowie eine zweite Vorwölbung (64), die im Wesentlichen transversal zu der Einführrichtung (E) von dem Zugentlastungs- oder Kabelhaltekörper (56) verläuft, wobei die zweite Vorwölbung (64) von der ersten Vorwölbung (63) beabstandet und parallel dazu ist, wobei ein Aufnahmeraum (65) zwischen der ersten und der zweiten Vorwölbung (63, 64) definiert ist, wobei das Verfahren die Schritte umfasst:
- Einführen eines elektrischen Drahtes oder Kabels (80) in den Installationsraum der Installationsdose (1); und
- optional, Verbinden des elektrischen Drahts oder Kabels (80) mit dem elektrischen Installationsmaterial innerhalb des Installationsraums der Installationsdose (1);
wobei das Verfahren ferner die Schritte umfasst:
- Anordnen des elektrischen Drahtes oder Kabels (80) an dem Zugentlastungs- oder Kabelhalteelement (55) des Zugentlastungseinsatzes (2); und
- Befestigen des elektrischen Drahtes oder Kabels (80) an dem Zugentlastungs- oder Kabelhalteelement (55) durch Umfassen des elektrischen Drahtes oder Kabels (80) und des Zugentlastungs- oder Kabelhalteelements (55) mittels eines Befestigungselements (81) und Anziehen des Befestigungselements (81), wobei ein Teil des Befestigungselements (81) innerhalb des Aufnahmeraums aufgenommen ist.

## Revendications

1. Ensemble d'une boîte d'installation (1) et d'un matériel d'installation électrique avec au moins un fil ou câble électrique (80), dans lequel la boîte d'installation comprend un boîtier avec une paroi inférieure (10) et une paroi circonférentielle (11) droite à partir de la paroi inférieure (10), dans lequel la paroi inférieure (10) et la paroi circonférentielle (11) enferment ensemble un espace d'installation pour le matériel d'installation électrique, dans lequel un bord supérieur (12) de la paroi circonférentielle (11) orientée à l'opposé de la paroi inférieure (10) délimite une ouverture d'installation pour fournir un accès à l'espace d'installation, dans lequel la paroi circonférentielle (11) est prévue avec une ouverture de passage (30) pour que le au moins un fil ou câble électrique (80) passe à travers cette dernière dans une direction d'insertion (E), dans lequel la boîte d'installation comprend en outre un insert de réducteur de tension ou de retenue de câble (2) inséré dans l'espace d'installation et installé au niveau de l'ouverture de passage (30), dans lequel l'insert de réducteur de tension ou de retenue de câble (2) est prévu avec un élément de réduction de tension ou de retenue de câble (55) ayant un corps de réduction de tension ou de retenue de câble (56) s'étendant sensiblement parallèlement à la direction d'insertion (E), et une fixation (81) pour recevoir et fixer le au moins un fil ou câble électrique (80) sur l'élément de réduction de tension ou de retenue de câble (55), dans lequel la fixation (81) entoure le au moins un fil ou câble électrique (80) et l'élément de réduction de tension ou de retenue de câble (55), dans lequel l'élément de réduction de tension ou de retenue de câble (55) comprend en outre une partie de réduction de tension ou de retenue de câble (63, 64, 65) configurée pour recevoir au moins une partie de la fixation (81) et pour empêcher sensiblement le mouvement de la fixation (81) dans au moins une direction sensiblement parallèle à la direction d'insertion (E), dans lequel la partie de réduction de tension ou de retenue de câble (63, 64, 65) est configurée pour fixer sensiblement la fixation (81) sur l'élément de réduction de tension ou de retenue de câble (55), dans lequel la partie de réduction de tension ou de retenue de câble comprend une première saillie (63) s'étendant de manière sensiblement transversale par rapport à la direction d'insertion (E) à partir du corps de réduction de tension ou de retenue de câble (56) et une seconde saillie (64) s'étendant de manière sensiblement transversale par rapport à la direction d'insertion (E) à partir du corps de réduction de tension ou de retenue de câble (56), dans lequel la seconde saillie (64) est éloignée de et parallèle à la première saillie (63), dans lequel un espace de réception (65) est défini entre les première et seconde saillies (63, 64), à l'intérieur duquel une partie de la fixation (81) est reçue.

2. Ensemble selon l'une quelconque des revendications précédentes, dans lequel l'insert de réducteur de tension (2) comprend en outre un corps d'insert (40, 41) ayant une ouverture d'insert définie à l'intérieur de ce dernier, dans lequel l'ouverture d'insert (53) est délimitée par un bord d'ouverture d'insert (54) et l'élément de réduction de tension ou de retenue de câble (55) est raccordé au corps d'insert (40, 41).

3. Ensemble selon l'une quelconque des revendications précédentes, dans lequel l'élément de réduction de tension ou de retenue de câble (55) est mobile entre une position fermée, dans laquelle l'élément de réduction de tension ou de retenue de câble (55) bloque l'ouverture de passage (30) au moins partiellement, et une position ouverte dans laquelle l'élément de réduction de tension ou de retenue de câble (55) s'étend sensiblement parallèlement à la direction d'insertion (E).

4. Ensemble selon la revendication 2 et la revendication 3, dans lequel le corps de réduction de tension ou de retenue de câble (56) a un premier côté (57) et un second côté (58) opposé au premier côté (57) dans sa direction longitudinale, dans lequel le corps de réduction de tension ou de retenue de câble (56), au niveau de son premier côté (57), est raccordé de manière articulée au bord d'ouverture d'insert (54), dans lequel lorsque l'élément de réduction de tension ou de retenue de câble (55) est dans la position fermée, l'élément de réduction de tension ou de retenue de câble (55) bloque au moins partiellement l'ouverture d'insert (53).

5. Ensemble selon la revendication 4, dans lequel une charnière, de préférence une charnière active (59), est prévue entre le corps de réduction de tension ou de retenue de câble (56) et le bord d'ouverture d'insert (54) afin de raccorder l'élément de réduction de tension ou de retenue de câble (55) de manière articulée au bord d'ouverture d'insert (54).

6. Ensemble selon la revendication 3, 4 ou 5, lorsqu'elle dépend de la revendication 2, comprenant en outre un ou plusieurs éléments de fixation cassables (60) prévus entre et raccordés au corps de réduction de tension ou de retenue de câble (56) et au bord d'ouverture d'insert (54), lorsque l'élément de réduction de tension ou de retenue de câble (55) est dans la position fermée, de préférence dans lequel les un ou plusieurs éléments de fixation cassables (60) sont des ponts en matériau cassable.

7. Ensemble selon l'une quelconque des revendications précédentes, dans lequel le corps de réduction de tension ou de retenue de câble (56) a une surface de contact (66) configurée pour être en contact avec le fil ou câble électrique (80) fixé à l'élément de réduction de tension ou de retenue de câble (55), de préférence dans lequel la surface de contact (66) est prévue avec des éléments de friction (67; 68) pour fournir une friction entre la surface de contact et le fil ou câble électrique fixé au corps de réduction de tension ou de retenue de câble.

8. Ensemble selon la revendication 7, dans lequel les éléments de friction (67; 68) comprennent un premier réseau (67) de dents, dans lequel le premier réseau (67) de dents s'étend dans une direction sensiblement parallèle à la direction d'insertion (E), de préférence dans lequel les éléments de friction (67; 68) comprennent un second réseau (68) de dents parallèle au premier réseau (67) de dents.

9. Ensemble selon l'une quelconque des revendications précédentes, lorsqu'elle dépend de la revendication 2, dans lequel une première bride (70) et une seconde bride (71) sont prévues au niveau d'un premier côté (51) du corps d'insert (40, 41), de préférence symétriques axialement l'une par rapport à l'autre, et faisant saillie du premier côté (51), de préférence dans lequel les première et seconde brides (70; 71) sont complémentaires par rapport à au moins une partie d'un bord d'ouverture de passage (33, 34) délimitant l'ouverture de passage (30).

10. Ensemble selon l'une quelconque des revendications précédentes, lorsqu'elle dépend de la revendication 2, dans lequel le corps d'insert (40, 41) est prévu avec au moins une première came de verrouillage (72) adaptée pour verrouiller l'insert de réducteur de tension (2) dans l'espace d'installation et au niveau de l'ouverture de passage (30), de préférence dans lequel la première came de verrouillage (71) fait saillie à partir d'un premier côté (51) du corps d'insert (40, 41) et fait face à un bord d'ouverture de passage (33,34) délimitant l'ouverture de passage (30).

11. Ensemble selon l'une quelconque des revendications précédentes, dans lequel l'insert de réducteur de tension (2) comprend deux ou plus, de préférence trois éléments de réducteur de tension (55) ou plus, de préférence dans lequel les éléments de réducteur de tension (55) sont agencés de manière sensiblement parallèle entre eux.

12. Procédé pour installer un fil ou câble électrique (80) dans une boîte d'installation (1), dans lequel la boîte d'installation comprend un boîtier avec une paroi inférieure (10) et une paroi circonférentielle (11) droite à partir de la paroi inférieure (10), dans lequel la paroi inférieure (10) et la paroi circonférentielle (11) enferment ensemble un espace d'installation pour le matériel d'installation électrique, dans lequel un bord supérieur (12) de la paroi circonférentielle (11) orientée à l'opposé de la paroi inférieure (10) délimite une ouverture d'installation pour fournir un accès à l'espace d'installation, dans lequel la paroi circonférentielle (11) est prévue avec une ouverture de passage (30) pour qu'au moins un fil ou câble électrique (80) passe à travers cette dernière dans une direction d'insertion (E), la boîte d'installation (1) comprenant en outre un insert de réducteur de tension (2) inséré dans l'espace d'installation et installé au niveau de l'ouverture de passage (30), dans lequel l'insert de réducteur de tension (2) est prévu avec un élément de réduction de tension ou de retenue de câble (55) ayant un corps de réduction de tension ou de retenue de câble (56) s'étendant de manière sensiblement parallèle par rapport à la direction d'insertion (E), et une fixation (81) pour recevoir et fixer au moins un fil ou câble électrique (80) sur l'élément de réduction de tension ou de retenue de câble (55), dans lequel l'élément de réduction de tension ou de retenue de câble (55) comprend en outre une partie de réduction de tension ou de retenue de câble (63, 64, 65) configurée pour recevoir au moins une partie de la fixation (81) et pour empêcher sensiblement le déplacement de la fixation (81) dans au moins une direction sensiblement parallèle à la direction d'insertion (E), dans lequel la partie de réduction de tension ou de retenue de câble (63, 64, 65) est configurée pour fixer sensiblement la fixation (81) à l'élément de réduction de tension ou de retenue de câble (55), dans lequel la partie de réduction de tension ou de retenue de câble comprend une première saillie (63) s'étendant de manière sensiblement transversale par rapport à la direction d'insertion (E) à partir du corps de réduction de tension ou de retenue de câble (56) et une seconde saillie (64) s'étendant de manière sensiblement transversale par rapport à la direction d'insertion (E) à partir du corps de réduction de tension ou de retenue de câble (56), dans lequel la seconde saillie (64) est éloignée de et parallèle à la première saillie (63), dans lequel un espace de réception (65) est défini entre les première et seconde saillies (63, 64), dans lequel le procédé comprend les étapes suivantes:
insérer un fil ou câble électrique (80) dans l'espace d'installation de la boîte d'installation (1); et
facultativement, raccorder le fil ou câble électrique (80) au matériel d'installation électrique dans l'espace d'installation de la boîte d'installation (1) ;
dans lequel le procédé comprend en outre les étapes suivantes:
placer le fil ou câble électrique (80) contre l'élément de réduction de tension ou de retenue de câble (55) de l'insert de réducteur de tension (2); et
fixer le fil ou câble électrique (80) à l'élément de réduction de tension ou de retenue de câble (55) en entourant le fil ou câble électrique (80) et l'élément de réduction de tension ou de retenue de câble (55) par une fixation (81) et en serrant la fixation (81), dans lequel une partie de la fixation (81) est reçue dans l'espace de réception.
